# EUROPEAN PATENT APPLICATION

(11) **EP 1 316 923 A2**
(43) Date of publication of application: **04.06.2003**
(21) Application number: 02254282.3
(22) Date of filing: 19.06.2002
(51) Int. Cl.: G07B 1/00, G07B 3/00, G01B 1/00, G07F 17/42

(54) **Media dispensing**

(30) Priority: 28.11.2001 GB 0128430
(71) Applicant: NCR International, Inc., Dayton, Ohio 45479 (US)
(72) Inventor: Ross, Gary Alexander, Colinsburgh, Leven KY9 1LW (GB)
(74) Representative: Williamson, Brian

(57) **Abstract**

A method of generating valuable media is described, the method comprising printing a machine-readable encoded representation of security features onto a media substrate, together with human-readable information regarding the media item. The method allows valuable media to be generated from unsecure or semi-secure media stocks.

Also described are valuable media items 10 having a substrate 12 including a number of security features such as magnetic regions 14 together with an encoded representation 20 of the number and position of the regions, and a human-readable representation 18 of the value of the media.

A self-service terminal 30 for generating such media items is also described.

## Description

The present invention relates to a method of generating valuable media. The invention further relates to methods of dispensing valuable media using a self service terminal (SST), to methods of validating such media, and to a valuable media item.

Self service terminals (SSTs) are frequently used for dispensing of valuable media items; for example, banknotes, tickets, vouchers, and the like. Of course it is necessary to guard against unauthorised access to stores of such items, frequently by containing the media within a secure safe within the SST. This increases the cost of providing and maintaining suitable SSTs, and also of replenishing the SSTs with media.

An alternative to storing valuable media within an SST is to generate the valuable media only when required, for example by printing relevant details onto blank media substrate prior to dispensing. This method is often used for tickets, vouchers, and the like. However, since a blank media substrate may be given value simply by printing the relevant information thereon, it is nonetheless considered advisable to store the blank substrate in a secure portion of the SST, to guard against unauthorised access to the substrate. It is possible to incorporate security features into the media substrate, such as holograms and the like, but this simply reinforces the value of the blank substrate, since the security feature may be used to verify that the substrate is genuine. Thus, conventional SSTs require secure areas within which media or media substrate may be stored prior to dispensing.

It is among the objects of embodiments of the present invention to obviate or alleviate these and other disadvantages of existing methods of dispensing or generating valuable media.

According to a first aspect of the present invention, there is provided a method of dispensing valuable media from a self service terminal (SST), the method comprising the steps of:
determining a characteristic of the media to be dispensed;
encoding a representation of the determined characteristic;
printing the encoded representation onto a media substrate; and
dispensing the printed media substrate from the SST.

Preferably the method further comprises the step of printing additional features of the media in a non-encoded form onto the media substrate. These features may include human-readable information, for example, the value, issuer, or type of media. In alternative embodiments of the invention, the media substrate may be 'ready-printed' with such features, requiring only the printing of encoded information to validate the media.

Thus, using the method of the present invention, a media item may be dispensed having both non-encoded characteristics (such as the value or type of media) together with encoded characteristics. The encoded characteristics may be used to verify the media, while the non-encoded characteristics may be used to indicate, for example, the value of the media to the user. Since the verifiable value of the media lies in a combination of the encoded and non-encoded characteristics, the blank media substrate has little value in itself, and cannot easily be used by unauthorised persons to generate verifiable valuable media in the absence of the relevant encoding algorithms. This allows the media substrate to be stored within the SST without requiring a safe or the like. The media substrate may be replenished by workers without requiring access to the safe, and without requiring security clearance to handle valuable media, so reducing operating costs of the SST.

The printing of the encoded representation onto the substrate may comprise deposition of ink onto the substrate, in the literal sense of the term 'printing', but should be understood to encompass any form of recording the encoded representation onto the substrate; for example, using 'electronic paper' to produce an electrophoretically-displayed representation, punching holes in the substrate, embossing the representation, or recording it as a watermark. Certain embodiments of the invention may include recording the information in a magnetic strip, or other recordable media, on the substrate.

Preferably the determined characteristic of the media to be dispensed is a characteristic of the media substrate itself; for example, a security feature incorporated into the media substrate on manufacture. Preferably the security feature is machine-readable; for example, ultraviolet or other radiation-reflecting threads or strands may be incorporated into the substrate material, or magnetic spots, metallic elements, or the like. The determined characteristic may include the type, number, arrangement, or a combination of these of some or all of the security features. For example, the number and position of magnetic spots on the substrate may be detected. Preferably the detected characteristic may be used to identify the particular substrate used; for example, where ultraviolet-reflecting threads are incorporated into a substrate, their positioning may be made random or nearly so for practical purposes. Where the encoded representation reflects the positioning of these threads, the encoding may be used to uniquely identify that substrate. Thus, should a counterfeit media item simply copy the encoded representation, the media item will be readily detectable as counterfeit, since the representation will not be related to the particular substrate. The determined characteristic may include a serial number or the like belonging to and incorporated into the substrate. Alternatively, or in addition, the determined characteristic may include an indication of the word count or similar feature of information printed onto the substrate. This is of particular utility with media such as cheques and the like, to reduce the possibility of amending genuine media items to have a larger value than intended; for example, should a user alter a cheque for 'five euros' to read 'five hundred euros', this amendment will become apparent when the word count of the cheque is verified.

Although such substrates do incorporate a security feature when blank, the fact that they have no value until an appropriately encoded representation has been printed thereon means that it is unnecessary to store blank substrates in a secure area of the SST, unlike conventional blank substrates having security features.

Alternatively, or in addition, the determined characteristic may be substantially external to the substrate itself. For example, the type or value of media to be dispensed, the time of dispense, the identity of the SST, SST operator, or user of the SST may all be incorporated into the encoded representation. For certain types of media, a particularly preferred characteristic to be incorporated is the owner of the dispensed media. For example, a cheque may be dispensed having details of the owner of the cheque incorporated into the encoded representation, for additional security. The identity of the owner of the media may be determined, for example, from an identification token used to access the SST by the owner, such as a credit card, biometrics measurement, or the like. It is preferred that both internal and external characteristics are encoded, although only external characteristics may be used if a lower degree of security is necessary.

Preferably the encoded representation is printed in a machine-readable form. The representation may be printed as a numeric code, a barcode, a 2-dimensional barcode, in visible form, in invisible form, as a digital 'watermark', or the like.

Preferably the additional features are printed in a human-readable form. The additional features may include the face value of the media, information regarding the owner, dispenser, or type of media, or any other information which the SST operator wishes to include on the media. The human-readable form may include ink deposited onto the substrate, or may include forms which are not literally 'printed'; for example, an electrophoretic display, embossing, watermarks, holograms, and the like. Use of a human-readable form for the additional features not only allows the immediate user of the media to determine, for example, the value and type of the media, but also allows person-to-person transactions to be conducted without the requirement for access to apparatus capable of reading the machine-readable features of the media.

Preferably the ink used to print either or both of the encoded representation and the additional features includes further security features. For example, the ink may be fluorescent, infra-red or ultraviolet reflective, magnetic, or the like; or include a tagging chemical to denote origin of the ink, or the like.

According to a further aspect of the present invention, there is provided a method of producing valuable media, the method comprising the steps of:
providing a media substrate having security features;
detecting a characteristic of the security features;
generating an encoded representation of the detected characteristic;
printing the encoded representation onto the substrate; and
printing additional media features onto the substrate in a non-encoded form.

The method may further comprise the step of identifying the owner of the media, and incorporating details of the owner's identity into the encoded representation.

According to a further aspect of the present invention, there is provided a media item comprising a media substrate having security features incorporated therein, an encoded representation of a characteristic of the security features printed on the substrate, and non-encoded media features printed on the substrate.

Preferably the security features are machine-readable. The media item may also comprise human-readable security features incorporated into the substrate.

Preferably the encoded representation is machine-readable.

Preferably the non-encoded media features are human-readable.

According to a yet further aspect of the present invention, there is provided a method of verifying a media item, the method comprising the steps of:
detecting an encoded representation of characteristics of the media on the media item;
decoding the encoded representation;
detecting the characteristics of the media item used to generate the encoded representation; and
comparing the detected characteristics of the media item with the decoded representation.

According to a still further aspect of the present invention, there is provided a self service terminal (SST) for generating and dispensing valuable media, the SST comprising:
means for storing media substrate to be dispensed;
means for detecting characteristics of a media substrate to be dispensed;
means for encoding a representation of the detected characteristics of the media substrate;
means for printing the encoded representation onto a media substrate;
means for printing further media characteristics onto a media substrate; and
means for dispensing printed media substrates.

According to a still further aspect of the present invention, there is provided a self service terminal (SST) for generating and dispensing valuable media items, the SST comprising:
a store for storing media substrates;
a detector for detecting characteristics of a media substrate;
a processor for generating an encoded representation of the detected characteristics;
a printer for printing the encoded representation and additional media characteristics onto a media substrate; and
a printed media dispenser.

These and other aspects of the present invention will now be described by way of example only and with reference to the accompanying drawings, in which:
Figure 1 shows a valuable media item in accordance with one embodiment of the present invention; and
Figure 2 shows a self service terminal (SST) for generating and dispensing valuable media in accordance with a further embodiment of the present invention.

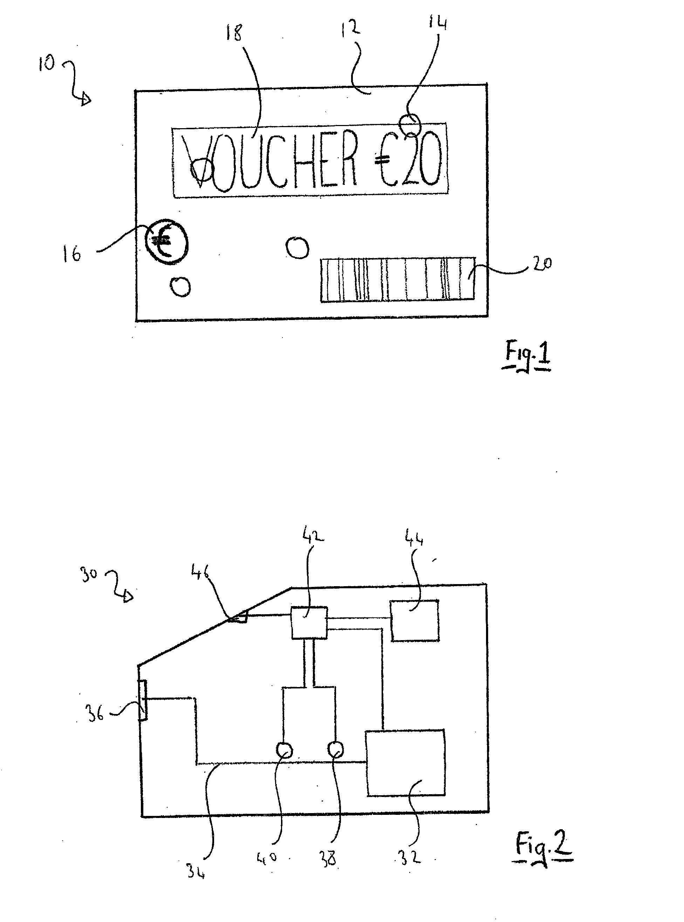

Referring first of all to Figure 1, this shows a media item in the form of a voucher in accordance with one embodiment of the present invention. The media item 10 comprises a media substrate 12 incorporated into which are a number of magnetic regions 14, which are not visible to the naked eye. During manufacture of the media substrate 12, the number and positioning of the magnetic regions is randomly produced. The substrate 12 also incorporates a security hologram 16, which is visible to a user. Printed onto the surface of the substrate 12 are user-readable indicia 18, in this example denoting the value and type of the media item 10. Additional security features may be incorporated into the media item 10 by printing the user-readable indicia 18 with ink having particular optical properties, or incorporating some other chemical 'tag' to identify the source of the media item 10. Also printed onto the substrate 12 is a bar code 20, the coding of which is selected to represent the number, type and position of the magnetic regions 14 of the substrate 12. The bar code 20 is machine readable, and may be printed in user-visible ink, or in ink which is machine-readable only; for example, the ink used may be ultraviolet reflective, but not visible light reflective.

Figure 2 illustrates a self service terminal (SST) 30 in accordance with a further embodiment of the present invention. The SST 30 comprises a media substrate store 32, in which blank media substrates 12 having magnetic or other security features 14 may be stored, the store 32 having a media transport path 34 leading to a media dispense slot 36. Disposed along the media transport path 34 are a magnetic reader 38 and a printer 40, both of which are connected to and controlled by a central processor 42. The processor 42 also communicates with and controls the media substrate store 32, as well as a secure valuable media safe 44, which is for secure storage of ready-made valuable media such as banknotes and the like. Also connected to the processor 42 is a user interaction interface 46, which includes an identification card reader and a touch sensitive display screen.

In use, the SST 30 functions as follows. The media substrate store 32 is stocked with blank media substrates 12 such as that illustrated in Figure 1. When a user wishes to obtain a media item 10, they approach the SST 30, and identify themselves to the SST 30 by means of the user interface 46; typically an identification card will be inserted into the card reader, which will be processed by the processor 42 to validate the user identity. The user may then use the display screen to select a desired transaction option; in this example, the dispensing of a media voucher 10 has been selected. In normal use, depending on the desires of the SST 30 operator, other options may be made available, such as dispensing of tickets, banknotes, permits, cheques, and the like.

The processor 42 then causes a single media substrate 12 to be released from the substrate store 32, and passed along the media transport path 34. The magnetic reader 38 then detects the number and position of magnetic areas 14 on the blank substrate 12, and returns this information to the processor 42. An encoding algorithm is then applied by the processor 42 to this information, to produce encoded information; a representation of the encoded information in the form of a bar code 20 is then printed onto the blank substrate 12 by the printer 40. Additional information may also be encoded into the bar code 20 if desired; for example, the identity of the user may be included, to ensure that only the authorised user may use the media item 10, as may be details of the SST 30 operator, and the time and place of media creation. In addition to the bar code 20, the printer 42 also prints human-readable indicia 18 onto the substrate 12, such as the value of the media item, as well as any other desired data. The final media item 10 is then delivered to the user through dispense slot 36.

When the user wishes to use the media item 10, its validity may be verified by reading the bar code 20 and the number and position of the magnetic regions 14; decoding of the bar code 20 will then allow comparison of the encoded information and the data on which the bar code is based. Additional verification may be made; for example, if the media item 10 includes details of the user's identity, the user may be required to present their identification card before using the media item, to allow verification of this information.

Thus, it can be seen that the present invention allows generation and dispensing of valuable media items from a self service terminal based on relatively low-value media substrates, without the requirement to keep the blank media substrates in a secure location. The ability to utilise additional verification of the media further increases security of the media items.

## Claims

1. A method of dispensing valuable media from a self service terminal (SST), the method comprising the steps of: determining a characteristic of the media to be dispensed; encoding a representation of the determined characteristic; printing the encoded representation onto a media substrate; and dispensing the printed media substrate from the SST.

2. The method of claim 1, further comprising the step of printing additional features of the media in a non-encoded form onto the media substrate.

3. The method of claim 1 or claim 2, wherein the encoded representation is printed in a machine-readable form.

4. The method of any preceding claim, wherein the additional features are printed in a human-readable form.

5. A method of producing valuable media, the method comprising the steps of: providing a media substrate having security features; detecting a characteristic of the security features; generating an encoded representation of the detected characteristic; printing the encoded representation onto the substrate; and printing additional media features onto the substrate in a non-encoded form.

6. A media item (10) comprising a media substrate (12) having security features (14) incorporated therein, an encoded representation (20) of a characteristic of the security features printed on the substrate, and non-encoded media features (18) printed on the substrate.

7. A method of verifying a media item, the method comprising the steps of: detecting an encoded representation of characteristics of the media on the media item; decoding the encoded representation; detecting the characteristics of the media item used to generate the encoded representation; and comparing the detected characteristics of the media item with the decoded representation.

8. A self service terminal (SST) (30) for generating and dispensing valuable media, the SST comprising: means (32) for storing media substrate to be dispensed; means (38) for detecting characteristics of a media substrate to be dispensed; means (42) for encoding a representation of the detected characteristics of the media substrate; means (40) for printing the encoded representation onto a media substrate; means for printing further media characteristics onto a media substrate; and means (36) for dispensing printed media substrates.

9. A self service terminal (SST) for generating and dispensing valuable media items, the SST comprising: a store (32) for storing media substrates; a detector (38) for detecting characteristics of a media substrate; a processor (42) for generating an encoded representation of the detected characteristics; a printer (40) for printing the encoded representation and additional media characteristics onto a media substrate; and a printed media dispenser (36) .
